Europäisches Patentamt

European Patent Office

Office européen des brevets

(19)

(11) **EP 1 575 328 A1**

(12) ## DEMANDE DE BREVET EUROPEEN

(43) Date de publication:
**14.09.2005 Bulletin 2005/37**

(51) Int Cl.⁷: **H04Q 7/38**

(21) Numéro de dépôt: **05290323.4**

(22) Date de dépôt: **14.02.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **23.02.2004  FR 0401759**

(71) Demandeur: **FRANCE TELECOM**
**75015 Paris (FR)**

(72) Inventeurs:
• **Marx, François**
  **38240 Meylan (FR)**
• **Evennou, Frédéric**
  **38100 Grenoble (FR)**

(74) Mandataire: **Loisel, Bertrand et al**
**Cabinet Plasseraud**
**65/67 rue de la Victoire**
**75440 Paris Cedex 09 (FR)**

(54) **Procédé et dispositif de localisation d'un terminal dans un réseau local sans fil**

(57) Ce procédé de localisation d'un terminal (10) dans un réseau local Wi-Fi comprend les étapes de mesure de la puissance d'émission de bornes de télécommunication (12, 14, 16, 18) dudit réseau, de comparaison des puissances du rayonnement reçu en provenance de chaque borne avec des valeurs de puissance stockées dans une base de données et qui correspondent chacune à une position du terminal par rapport à la borne et de filtrage du résultat délivré par les moyens de comparaison. Pour filtrer le résultat, on utilise un filtre particulier.

FIG.1

EP 1 575 328 A1

**Description**

L'invention concerne la localisation de terminaux de télécommunication dans un réseau local de type Wi-Fi. Elle se rapporte plus particulièrement à la localisation de terminaux dans des bâtiments clos, afin de pouvoir localiser un abonné porteur du terminal.

De manière conventionnelle, pour localiser une personne dans une zone géographique donnée, on utilise généralement le système de positionnement GPS (« Global Positioning System ») ou le système GSM (« Global System for Mobile Communication »). Cependant, ces techniques sont difficilement envisageables en milieu clos, en raison de leurs performances.

En effet, ces techniques ne permettent pas de fournir une précision suffisante, qui doit être dans l'application envisagée de l'ordre de quelques dizaines de mètres.

Le but de l'invention est donc de pallier ces inconvénients et se rapporte selon un premier aspect à un procédé de localisation d'un terminal dans un environnement clos selon lequel on mesure la puissance d'émission de bornes de télécommunication d'un réseau local sans fil, on compare les puissances du rayonnement reçu en provenance d'au moins deux bornes avec des valeurs de puissance stockées dans une base de données, et qui correspondent chacune à une position du terminal par rapport à la borne, et l'on filtre le résultat délivré par l'étape de comparaison, et selon lequel on utilise un filtre particulaire ou un filtre de Kalman au cours de l'étape de filtrage.

Ainsi, l'utilisation du réseau local Wi-Fi pour la localisation du terminal, combinée à l'utilisation du filtre particulaire ou du filtre de Kalman permet d'améliorer considérablement la précision des mesures et d'éliminer les déplacements improbables en tenant compte, notamment, de la structure du bâtiment dans lequel se propage le terminal à localiser, et de tenir compte des mouvements de l'utilisateur.

L'intérêt du filtrage est de limiter l'effet des fluctuations de puissance qui induisent des mouvements et des positions incohérentes.

Selon un mode de mise en oeuvre, on utilise un filtre particulaire. Au cours du filtrage particulaire, on modélise l'ensemble des positions possibles du terminal sous la forme de particules affectées chacune d'une probabilité de présence, on détermine a priori la nouvelle position possible de chaque particule et l'on corrige un poids affecté à la particule, à partir de nouvelles mesures de puissances.

Dans ce cas, la position de chaque particule est déterminée *a priori* à partir de la dernière position connue de la particule et en introduisant un bruit sur la vitesse de la particule de manière à obtenir un déplacement aléatoire des particules entre deux mesures de puissances successives.

Par exemple, pour la détermination *a priori* de la nouvelle position possible de chaque particule, on détermine la valeur de la nouvelle position de la particule, sa vitesse, et sa probabilité de présence en utilisant la relation suivante :

$$
\begin{bmatrix} v_{k+1} \\ y_{k+1} \\ Vx_k \\ Vy_k \end{bmatrix} = \begin{bmatrix} 1 & O & Ts & O \\ O & 1 & O & Ts \\ O & O & 1 & O \\ O & O & O & 1 \end{bmatrix} \begin{bmatrix} x_k \\ y_k \\ Vx_k \\ Vy_k \end{bmatrix} + \begin{bmatrix} Ts/2 & O & O & O \\ O & Ts/2 & O & O \\ O & O & Ts & O \\ O & O & O & Ts \end{bmatrix} \begin{bmatrix} v_{x_k} \\ v_{y_k} \\ v_{x_k} \\ v_{y_k} \end{bmatrix}
$$

dans laquelle :

$x_{k+1}$ et $y_{k+1}$ désignent les coordonnées déterminées a priori de la particule ;
$x_k$ et $y_k$ désignent les coordonnées de la particule déterminées à partir d'une mesure de puissances précédente ;
$Vx_{k+1}$ et $Vy_{k+1}$ désignent la vitesse de la particule selon les directions x et y ;
$vx_k$ et $vy_k$ désignent un bruit traduisant le déplacement de la particule entre deux mesures consécutives.

Selon encore un autre mode de mise en oeuvre, au cours de l'étape de correction de la position de la particule déterminée *a priori,* on utilise en outre des informations de déplacement improbable de chaque particule et l'on modifie la probabilité de présence associée à la particule en fonction des informations de déplacement improbable.

Par exemple, on annule la probabilité de présence de la particule lorsque la particule a traversé un mur d'enceinte entre la dernière position et la nouvelle position déterminée *a priori.*

Selon un mode de mise en oeuvre avantageux, on utilise des informations élaborées à partir d'un plan mémorisé d'un bâtiment dans lequel se situe le terminal à localiser pour élaborer les informations de déplacement improbable.

Selon encore un autre mode de mise en oeuvre avantageux, on utilise un modèle d'un bâtiment dans lequel se situe le terminal à modéliser, le modèle comprenant un ensemble de trajets possibles pour les particules selon lesquels elles sont autorisées à se déplacer, ce modèle étant de préférence élaboré à partir d'un diagramme de Voronoi du bâtiment.

Selon une autre caractéristique de l'invention, l'étape de correction de la position de la particule comporte en outre une étape consistant à déterminer la valeur d'une variable représentative de la position de chaque particule correspondant à des niveaux de puissance reçus, ladite variable étant modélisée sous la forme d'une loi gaussienne apte à représenter une distance réaliste que peut parcourir une particule entre deux mesures de puissance consécutives.

Enfin, la localisation du terminal est calculée par calcul du barycentre des probabilités de présence associées respectivement aux particules, une étape de normalisation des probabilités de présence associées aux particules pouvant en outre être prévue.

Selon une autre caractéristique de l'invention, on utilise un filtre de Kalman apte à tenir compte des mouvements du terminal.

Les équations d'étapes du filtre de Kalman sont les suivantes :

$$X_{k=A.X_{k-1}}+w_{k-1}$$

et

$$Z_{k=H.X_k}+w'_k$$

dans lesquelles :

$X_k$ est une variable d'état correspondant à la position ($x_k$, $y_k$) et à la vitesse ($vx_k$, $vy_k$) du terminal ;
$Z_k$ est une mesure des coordonnées $x_{BD}$ et $y_{BD}$ du terminal issues de la mesure de puissances ;
w et w' sont des bruits gaussiens ; et
A et H sont des matrices du filtre,

avec :

$$X_k = \begin{bmatrix} x_k \\ y_k \\ vx_k \\ vy_k \end{bmatrix}$$

$$Z_k = \begin{bmatrix} x_{BD} \\ y_{BD} \end{bmatrix}$$

$$A = \begin{bmatrix} 1 & 0 & T_s & 0 \\ 0 & 1 & 0 & T_s \\ 0 & 0 & 1 & 0 \\ 0 & 0 & 0 & 1 \end{bmatrix}$$

et

$$H = \begin{bmatrix} 1 & 0 & 0 & 0 \\ 0 & 1 & 0 & 0 \end{bmatrix}$$

Selon l'invention, il est également proposé un dispositif de localisation d'un terminal dans un environnement, comprenant des moyens de mesure de la puissance d'émission de bornes de télécommunication d'un réseau local sans fil et des moyens de comparaison des puissances du rayonnement reçu en provenance de chaque borne avec des valeurs de puissance stockées dans une base de données et qui correspondent chacune à une position du terminal par rapport à la borne et des moyens de filtrage du résultat délivré par les moyens de comparaison, les moyens de filtrage comportant de moyens de filtrage particuliers ou un filtre de Kalman apte à tenir compte des mouvements du terminal.

Selon une implémentation préférée, les étapes du procédé sont déterminées par les instructions d'un programme de localisation incorporé dans un circuit électronique, tel une puce, elle-même pouvant être disposée dans un dispositif électronique tel qu'un terminal de communication. Le procédé de localisation selon l'invention peut tout aussi bien être mis en oeuvre lorsque ce programme est chargé dans un organe de calcul tel qu'un processeur ou équivalent, faisant partie par exemple d'un terminal de communication, dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé à partir d'un serveur accessible sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est une vue schématique d'un bâtiment clos dans lequel on souhaite localiser un terminal ;
- la figure 2 est un schéma synoptique d'un système de localisation selon l'invention ;
- la figure 3 montre l'architecture d'une base de données servant à localiser un terminal à partir de puissances mesurées ;
- la figure 4 est un organigramme illustrant le principe de localisation du terminal en utilisant un filtre de Kalman ;
- la figure 5 est un organigramme illustrant le principe de localisation du terminal dans le bâtiment en utilisant un filtre particulaire ;
- la figure 6 est une vue schématique du bâtiment illustrant la propagation des particules ;
- la figure 7 est un schéma illustrant le principe de modélisation du bâtiment en utilisant un diagramme de Voronoi ;
- les figures 8a à 8f illustrent le principe d'élaboration du modèle du bâtiment à partir du diagramme de Voronoi de ce bâtiment ; et
- la figure 9 est un organigramme illustrant la localisation d'un terminal à partir d'un filtrage particulaire utilisant un diagramme de Voronoi pour modéliser l'environnement dans lequel se situe le terminal.

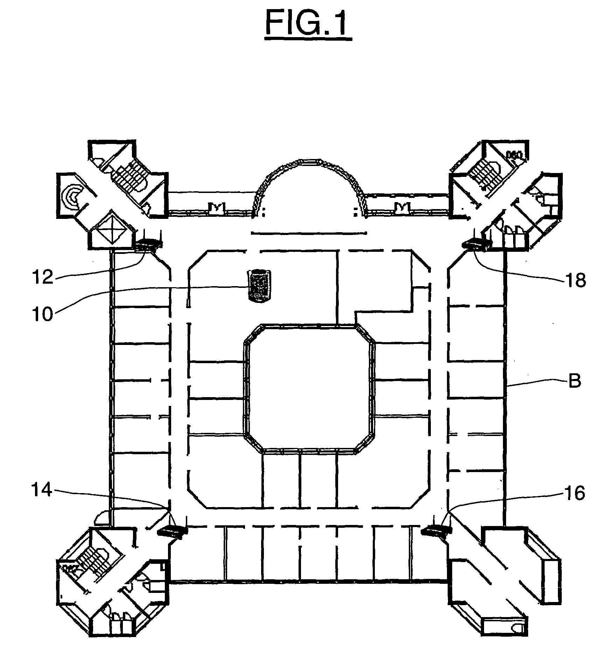

Sur la figure 1, on a représenté l'architecture générale d'un bâtiment B, constitué par exemple par les locaux d'une société ou dans lesquels est organisée une exposition ou un Salon. Le bâtiment B constitue un environnement clos dans lequel il convient de localiser un terminal 10 afin de pouvoir situer son propriétaire.

Le terminal 10 est constitué par un poste de télécommunication de type Wi-Fi, c'est-à-dire un poste apte à entrer en communication avec un ensemble de bornes 12, 14, 16 et 18 d'un réseau local Wi-Fi.

Dans le cadre de la présente description, par borne Wi-Fi, on désigne une borne d'un réseau local sans fil dont la position n'a pas vocation à être modifiée souvent, telle qu'un point d'accès 802.11 ou une borne « Bluetooth » fixe. On notera cependant que la présente description s'applique, de manière générale, à la localisation d'un terminal dans tout type de réseau local sans fil.

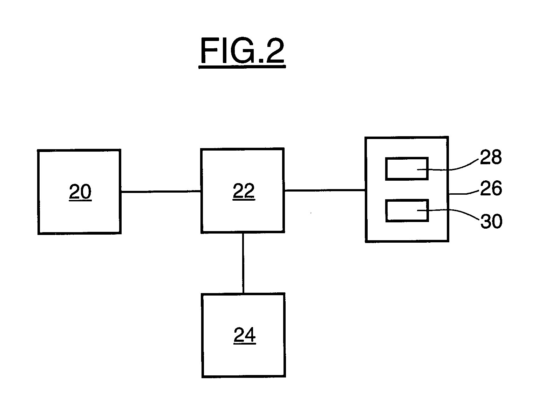

En se référant à la figure 2, le dispositif de positionnement, qui peut, par exemple être entièrement intégré au terminal 10, comporte tout d'abord un premier étage 20 intégrant des capteurs Wi-Fi et des moyens de mesure de puissance. Ce premier étage 20 est raccordé à un premier étage de calcul 22 qui communique avec une base de données 24 dans laquelle sont stockées des valeurs de niveau de puissance pour chaque emplacement localisable du bâtiment B. Ce premier étage de calcul 22 récupère, à partir des niveaux de puissance fournis par le premier étage 20, un emplacement probable pour le terminal 10.

En effet, la localisation du terminal 10 est tout d'abord basée sur l'utilisation de la base de données dans laquelle à chaque position du terminal 10 dans le bâtiment B sont affectées des valeurs de niveaux de puissance du rayonnement reçu en provenance des bornes 12, 14, 16 et 18, respectivement.

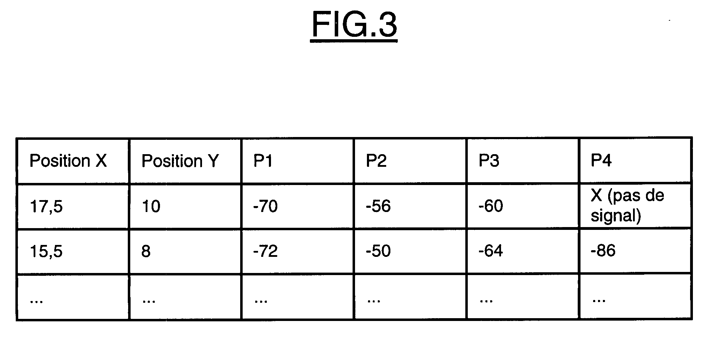

Ainsi, comme représenté à la figure 3, à partir d'une mesure des puissances P1, P2, P3 et P4 reçues en provenance de chaque borne, il est possible de déterminer les positions X et Y du terminal. Cette base de données est élaborée lors d'une phase de calibrage préalable au cours de laquelle on procède à un maillage du bâtiment et, pour chaque maille du bâtiment correspondant à une position X, Y, on affecte des niveaux de puissance reçus des bornes Wi-Fi 12, 14, 16 et 18. Par exemple, dans le cas où il s'agit de localiser un terminal dans les locaux d'une entreprise, chaque maille correspond à un bureau ou à une salle du bâtiment B.

Dans le but d'améliorer la précision de la localisation, le dispositif de localisation comporte en outre des systèmes de filtrage 26 fonctionnant par exemple de manière indépendante, à savoir un système de filtrage 28 utilisant un filtre de Kalman, qui est destiné à tenir compte des mouvements de l'utilisateur et limiter les fluctuations de positions, ou un système de filtrage 30 constitué par un filtre particulaire qui permet de tenir compte de la structure du bâtiment et du mouvement de l'utilisateur.

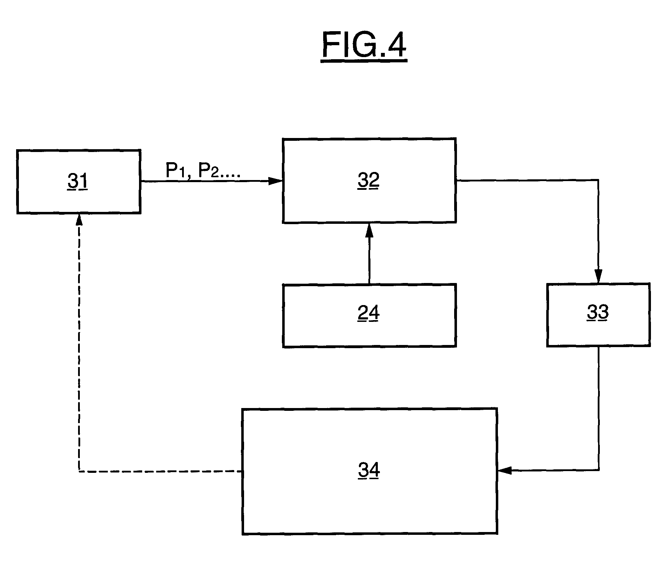

En référence à la figure 4 qui illustre un premier mode de mise en oeuvre de l'invention basé sur l'utilisation du filtre de Kalman, après mesure des niveaux de puissance (étape 31) l'étage de calcul procède, lors de l'étape 32 suivante, à un calcul de la position Z du terminal 10 à partir des coordonnées extraites de la base de données (*BD*). Ce point Z correspond à une localisation brute et est élaboré à partir de l'équation suivante :

$$Z = \arg\min \Sigma(Pborne_i(x,y) - Pborne_i(reçu))^2$$

$$z\varepsilon(x,y)delaBD_{touteslesbornes}$$

En d'autres termes, le point Z correspond au point le plus proche de l'espace des puissances au sens de la distance euclidienne entre les puissances reçues et les puissances de la base de donnée.

Ce point Z constitue l'une des entrées du filtre de Kalman dont les entrées sont les suivantes :

$$X_k = \begin{pmatrix} x_k \\ y_k \\ vx_k \\ vy_k \end{pmatrix} et Z = \begin{pmatrix} x_{BD} \\ y_{BD} \end{pmatrix}$$

dans lesquelles :

$x_k$ et $y_k$ désignent les coordonnées du terminal ;
$vx_k$ et $vy_k$ désignent les coordonnées du vecteur vitesse du terminal ; et
$x_{BD}$ et $y_{BD}$ désignent les coordonnées extraites de la base de données.

Les équations d'état du filtre de Kalman sont les suivantes

$$X_k = A \cdot X_{k-1} + w_{k-1}$$

et

$$Z_k = H \cdot X_k + w'_k$$

qui représentent respectivement la dynamique de l'utilisateur et la différence entre la position de l'utilisateur donnée par le filtre de Kalman et la position de l'utilisateur issue de la base de données.

Dans ces équations d'état :

$$A = \begin{pmatrix} 1 & 0 & T_s & 0 \\ 0 & 1 & 0 & T_s \\ 0 & 0 & 1 & 0 \\ 0 & 0 & 0 & 1 \end{pmatrix} \quad et \quad H = \begin{pmatrix} 1 & 0 & 0 & 0 \\ 0 & 1 & 0 & 0 \end{pmatrix}$$

On cherche alors à trouver à partir de l'état à l'instant k-1, c'est-à-dire l'état représenté par la variable d'état $X_{k-1}$ et de la mesure à l'instant k, c'est-à-dire le point $Z_k$ extrait de la base de données (étape 33), l'état à l'instant k, c'est-à-dire les coordonnées de la variable d'état $X_k$.

Pour cela, on pose les équations suivantes :

$$X_k^- = A.X_K$$

$$P_k^- = A.P_{k-1}.A^T + Q$$

$$K_k = P_k^-.H^T(H.P_k^-\ H^T + R)^{-1}$$

$$X_k = X_k^- + K_k(Z_k - H.X_k^-)$$

$$P_k = (Id - K_k.H)P_k^-$$

Comme on le conçoit, à l'aide de ces équations, on obtient donc la valeur de la variable d'état $X_k$, ce qui correspond à la position la plus probable, avec une erreur attendue sur la mesure correspondant à $P_k$. (étape 34). On retourne alors à l'étape 31 précédente pour acquérir de nouvelles mesures de puissance.

Comme indiqué précédemment, selon une autre variante, ou de manière additionnelle, on utilise en outre un filtre particulaire 30 de manière à tenir compte de la structure du bâtiment dans lequel se propage le terminal 10.

Un filtrage particulaire est une méthode globale qui repose sur une exploration du bâtiment par des particules dont la dynamique évolue de façon aléatoire. L'ensemble de ces particules est distribué selon la probabilité du processus à estimer, conditionnelle aux observations issues des mesures de puissance.

Un tel filtre permet d'intégrer plusieurs informations de différente nature, à savoir des informations de puissance ou des informations relatives à une position, un plan de l'environnement dans lequel se situe le terminal, des informations de navigation inertielle, c'est-à-dire vitesse et accélération du terminal, direction du déplacement, ... Ceci est rendu possible par l'emploi de densités de probabilité qui modélisent ces différents paramètres.

Ainsi, le filtre particulaire est basé sur l'emploi d'un ensemble de particules qui modélisent une position possible du terminal, et qui sont affectées chacune d'une probabilité de présence.

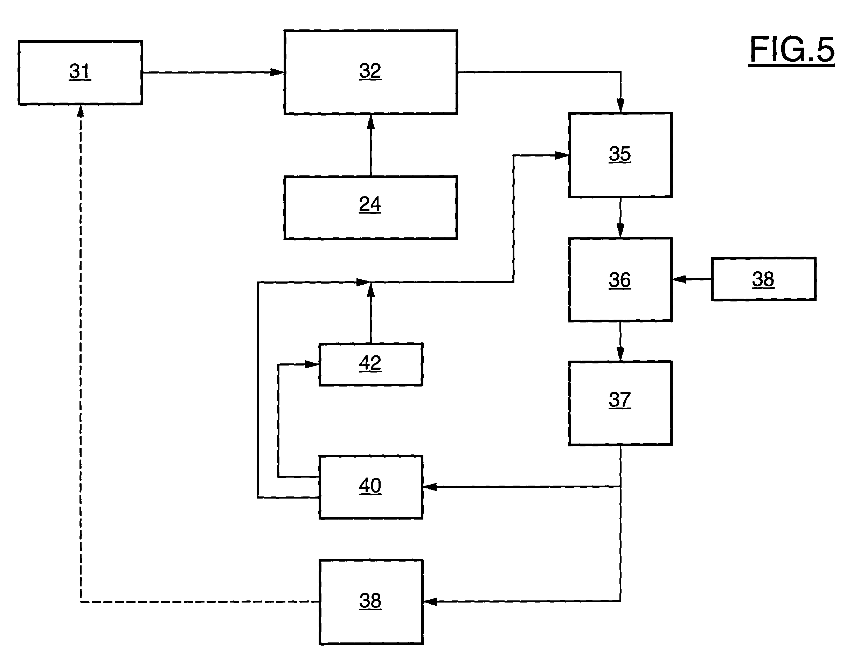

On va maintenant décrire en référence à la figure 5, la procédure de filtrage utilisant le filtre particulaire. Sur cette figure, les étapes 31 et 32 sont identiques aux étapes correspondantes de la figure 4.

Le filtrage particulaire débute par une étape 35 de détermination *a priori* de la nouvelle position de chacun des particules. Cette étape, qui sera décrite en détail par la suite, consiste essentiellement à déterminer la position future de chaque particule à partir de leur dernière position connue.

Cette première étape 35 est suivie d'étapes 36 et 37 au cours desquelles on met à jour le poids de chaque particule en utilisant de nouvelles mesures provenant des capteurs.

Selon ce principe, le filtre particulaire peut être défini selon les deux équations suivantes :

$$X_k = f_k(X_{k-1}, v_{k-1})$$

$$Z_k = h_k(X_k, n_k)$$

dans lesquelles $X_k$ est un vecteur contenant la position et la vitesse du terminal, $v_{k-1}$ et $n_k$ désignent deux bruits aléatoires, $f_k$ et $h_k$ désignent deux fonctions, éventuellement non-linéaires, permettant respectivement de déterminer la position *a priori* du terminal en fonction de l'historique de positions précédentes et de relier la position *a priori* à l'ensemble des mesures disponibles.

Il peut être démontré que le poids $\omega_{k+1}{}^i$ d'une particule i est lié au poids $\omega_k$ de cette particule à l'instant k précédent et peut être défini selon la relation suivante :

$$w^i_{k+1} \; \alpha \; w^i_k \ast \frac{\Pr\left[z_k\middle|x^i_k\right]\Pr\left[x^i_k\middle|x^i_{k-1}\right]}{q\left(x^i_k\middle|x^i_{k-1},z_k\right)}$$

dans laquelle :

$$\Pr\left[x^i_k\middle|x^i_{k-1}\right]\Pr\left[x^i_k\middle|x^i_{k-1}\right]etq\left(x^i_k\middle|x^i_{k-1},z_k\right)$$

désignent respectivement la probabilité de présence d'une particule calculée *a priori,* la probabilité de présence calculée *a posteriori* et une fonction d'importance pénalisant les déplacements improbables.

Ainsi, on constate que le poids de chaque particule tient compte de la loi de prédiction *a priori* et de la loi de prédiction *a posteriori.*

En ce qui concerne la détermination *a priori* de la nouvelle position des particules, comme indiqué précédemment, cette position est déterminée seulement à partir de leur dernière position connue et en faisant se propager les particules de manière aléatoire dans le bâtiment en utilisant un bruit sur les vitesses déterminé de sorte que les particules bougent entre deux mesures successives.

La détermination *a priori* de la nouvelle position de chaque particule s'effectue donc à partir de la relation suivante :

$$\begin{bmatrix} x_{k+1} \\ y_{k+1} \\ V_{xk+1} \\ V_{yk+1} \end{bmatrix} = \begin{bmatrix} 1 & 0 & T_s & 0 \\ 0 & 1 & 0 & T_s \\ 0 & 0 & 1 & 0 \\ 0 & 0 & 0 & 1 \end{bmatrix}\begin{bmatrix} x_k \\ y_k \\ V_{xk} \\ V_{yk} \end{bmatrix} + \begin{bmatrix} \dfrac{T_s}{2} & 0 & 0 & 0 \\ 0 & \dfrac{T_s}{2} & 0 & 0 \\ 0 & 0 & T_s & 0 \\ 0 & 0 & 0 & T_s \end{bmatrix}\begin{bmatrix} v_{xk} \\ v_{yk} \\ v_{xk} \\ v_{yk} \end{bmatrix}$$

dans laquelle

$x_{k+1}$ et $y_{k+1}$ désignent les coordonnées déterminées a priori de la particule ;
$x_k$ et $y_k$ désignent les coordonnées de la particule déterminées à partir d'une mesure de puissances précédente ;
$Vx_{k+1}$ et $Vy_{k+1}$ désignent la vitesse de la particule selon les directions x et y
$vx_k$ et $vy_k$ désignent un bruit dans les directions x et y traduisant le déplacement de la particule entre deux mesures consécutives.

Après avoir déterminé *a priori* la nouvelle position de chaque particule, lors de la détermination de la position a *posteriori,* on recherche les particules qui ont traversé un mur en utilisant une base de données 38 illustrant une vue du bâtiment ou, de manière générale, dans laquelle sont stockées des informations de déplacements improbables.

Essentiellement, au cours de cette phase, on procède à une comparaison entre le trajet d'une particule, entre la position précédente et la nouvelle position, et le plan du bâtiment de manière à déterminer si cette particule a traversé un mur. Si tel est le cas, il est nécessaire de pénaliser, voire d'éliminer les particules qui ont traversé un mur car il s'agit d'un mouvement qu'un utilisateur ne peut effectuer. Ainsi, à l'issue de ce traitement, chaque particule restante correspond à une position possible au sein de son environnement. Lors de l'étape 37 suivante, après réception d'une nouvelle mesure, le poids de chaque particule est mis à jour à partir de la position associée au niveau de puissance correspondant à une nouvelle mesure. La densité de probabilité de présence affectée *a posteriori* à chaque particule, c'est-à-dire en tenant des résultats issus d'une nouvelle mesure est donnée par la relation suivante :

$$\Pr\left[Z_k \middle| x_k^i\right] = \exp\left[\frac{(X_{Zk} - X_{xk}^i)^2 + (Y_{Zk} - Y_{xk}^i)^2}{\sigma^2}\right].$$

Il a été constaté qu'il était avantageux de choisir, pour élaborer cette densité de probabilité, une loi gaussienne centrée sur la position issue de la mesure et d'écart type judicieusement choisi de façon à représenter une distance réaliste que peut parcourir le terminal entre deux mesures successives.

Enfin, lors de l'étape 38 suivante, le nouveau poids de la particule est déterminé, selon la relation suivante :

$$w_{k+1}^i \; \alpha \; w_k^i * \Pr\left[z_k \middle| x_k^i\right] * \Pr\left[x_k^i \middle| x_{k-1}^i\right]$$

Une étape de normalisation des poids peut être effectuée au cours de cette étape 38 afin d'obtenir la densité de probabilité suivante :

$$w_k^i = \frac{w_k^i}{\sum_{k=1}^{N_s} w_k^i}.$$

Ainsi, à chaque réception d'une nouvelle mesure de puissances, le filtre évolue, et le poids de particules évolue. En particulier, en raison de l'affectation d'un poids faible ou nul à certaines particules ayant subi un déplacement improbable, une dégénérescence du filtre apparaît. Cette dégénérescence peut se poursuivre jusqu'à ce qu'une seule particule reste en vigueur.

Pour pallier cet inconvénient, à l'issue de l'étape 37 de mise à jour du poids de chaque particule, on procède, le cas échéant, à un ré-échantillonnage des particules de manière à ramener les particules qui ont un poids très faible, c'est-à-dire les particules qui correspondent à une position improbable du terminal, dans la zone dans laquelle le mobile se trouve probablement, c'est-à-dire autour des particules qui ont un poids significatif. Pour ce faire, lors d'une première étape 40, on détermine si les conditions sur le ré-échantillonnage sont remplies. Ce test consiste à détecter si le nombre de particules $N_{eff}$ en vigueur est inférieur à une valeur de seuil $N_{seuil}$. Ce test est réalisé à partir de la relation suivante :

$$N_{eff} = \frac{1}{\sum_{i=1}^{N_s} \left(w_k^i\right)^2} \leq N_{seuil}$$

Dans le cas où le nombre de particules est inférieur à la valeur de seuil, on procède à un ré-échantillonnage (étape 42).

Dans le cas contraire, la procédure se poursuit par l'étape 35 précédemment mentionnée.

On notera que, de préférence, afin d'éviter de faire perdre de la diversité aux particules, au cours du ré-échantillonnage, on introduit une certaine diversité parmi les particules en introduisant un bruit dans les particules de manière à leur permettre d'explorer à nouveau la zone du bâtiment dans laquelle elles se situent.

L'algorithme de ré-échantillonnage mis en oeuvre est le suivant :

- au cours d'une première étape, on calcule la matrice de covariance $S_k$ des particules ;
- On procède alors au calcul du bruit $D_k$ tel que $S_k = D_k D_k^T$

- On procède alors au ré-échantillonnage proprement dit en initialisant un vecteur fonction de répartition cumulée CDF tel que CDF (1)=0 ;
- On construit CDF tel que $CDF(i)= CDF=(i\text{-}1)+w^i_k$ avec i = {2 : $N_s$}
- On initialise une variable i à 1 ;
- On tire aléatoirement une valeur $u(1)$ dans une loi uniforme $U[0,N_s^{-1}]$ ;
- On parcourt la fonction de répartition cumulée afin de détecter les transitions intéressantes. Pour ce faire, on procède à une détection de transition. Il s'agit de calculer la valeur u(j) selon la relation :

$$u(j) = u(1) + \frac{j\text{-}1}{N_S}$$

et de tester que la somme des poids des particules u(j) est supérieure à la fonction CDFi, selon la relation suivante :

$$Tant\ que\ u(j)>CDF(i)\ alors\ i=i+1$$

Si tel est le cas, on incrémente la variable i et l'on ramène au même poids la particule intéressante selon les relations suivantes :

$$x^i_k = x^i_k\ \text{et}\ w^j_k=N^{-1}_{\cdot x}$$

Enfin, afin d'éviter que des particules restent coincées dans une zone du bâtiment, notamment en raison du fait qu'elles ne peuvent traverser un mur, on parcourt toutes les particules, on tire aléatoirement un bruit $\varepsilon^i$ dans un noyau (gaussien, Epanechnikov,...) et on met à jour la nouvelle position des particules tel que :

$$x^i_k = x^i_k + h_{opt}D_k\varepsilon^i$$

Ce dernier bruit permet de réintroduire une nouvelle diversité autour des positions intéressantes. Dans le cas d'un noyau gaussien, la constante $h_{opT}$ s'exprime de la manière suivante :

$$h_{opt} = A(K)N_s\frac{1}{n_{x+4}}\ \text{et}\ A(K) =\left(\frac{4}{n_{x+2}}\right)^{\frac{1}{n_x+4}}$$

$n_x$ désignant la dimension de l'espace dans lequel on se situe.

Dans la description qui vient d'être faite, la position de chaque particule déterminée a priori est corrigée en utilisant des informations de déplacement improbables élaborées à partir d'un plan du bâtiment dans lequel se déplace le terminal, cette correction consistant essentiellement à modifier la probabilité de présence associée à chaque particule en fonction des informations de déplacement improbables.

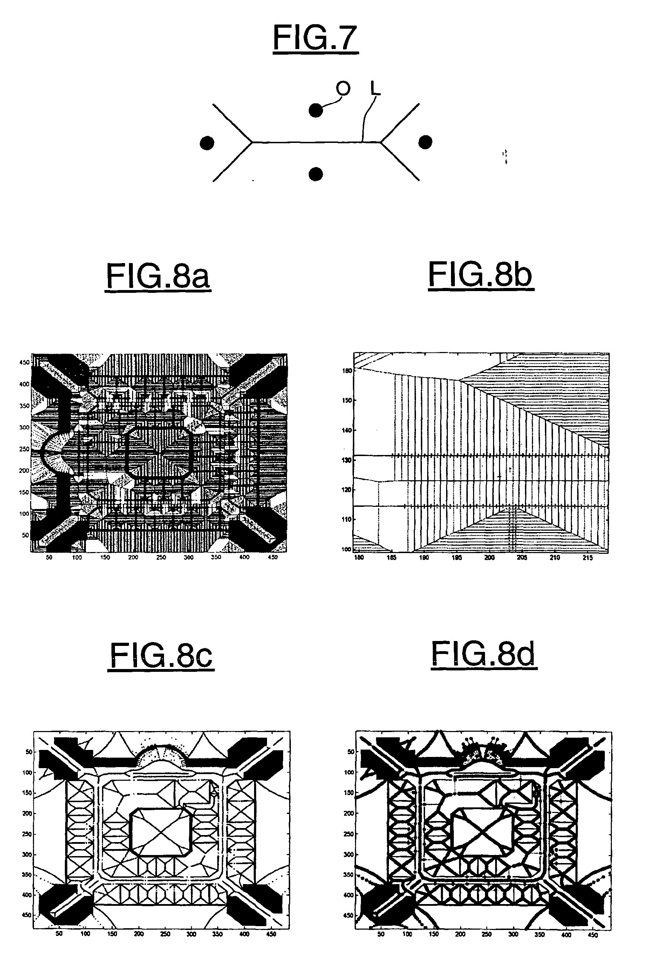

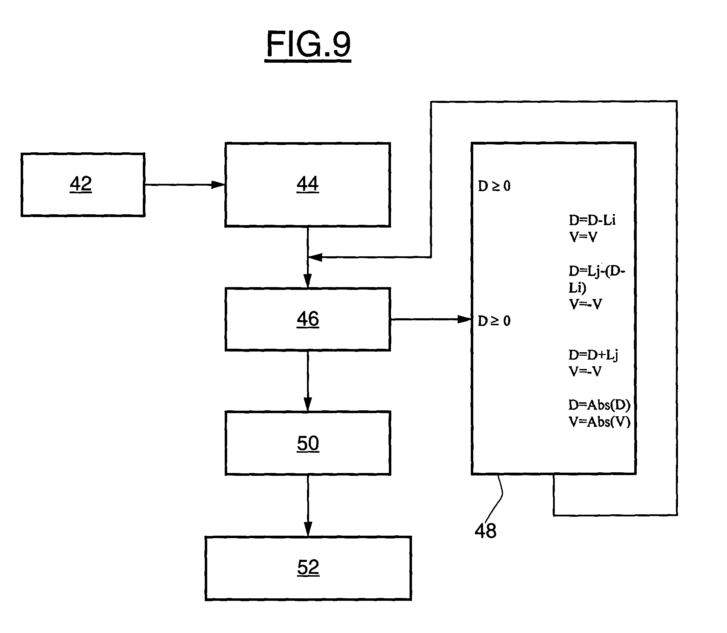

Selon un autre mode de réalisation, qui va maintenant être décrit en référence aux figures 7 à 9, on contraint les particules à se déplacer sur des trajets prédéterminés correspondants uniquement à des trajets possibles pour le terminal. Pour ce faire, on utilise une modélisation du bâtiment regroupant l'ensemble des trajets possibles.

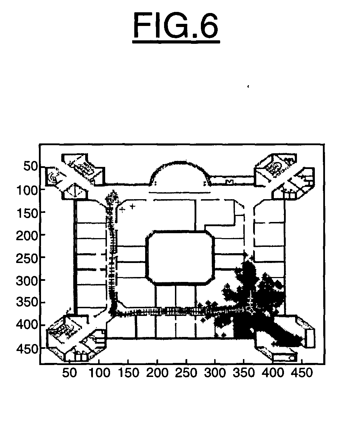

Comme on le voit sur les figures 7a à 7f, cette modélisation est basée sur l'élaboration d'un diagramme de Voronoi et est calculée automatiquement à partir d'une image, par exemple au format JPEG, du bâtiment. En principe, comme visible sur la figure 6, il s'agit essentiellement de rechercher les limites L équidistantes d'objets O présents dans l'environnement.

Ainsi, lorsque l'on considère le plan d'un bâtiment, il est aisé de détecter les murs qui sont représentés généralement par des pixels noirs. On cherche alors le diagramme de Voronoi associé aux murs. Un tel diagramme est obtenu par le biais d'algorithmes à la portée d'hommes du métier, qui ne seront donc pas décrits davantage par la suite. Un tel diagramme est représenté sur la figure 8a et, à plus grande échelle sur la figure 8b, pour une portion déterminée du bâtiment.

Comme on le sait, un tel diagramme est très riche en informations et contient en particulier un certain nombre d'arcs liés à la recherche des limites d'équidistance entre les pixels du mur. Dans le cas de la présente invention, il est nécessaire de supprimer tous les arcs qui ont un noeud de départ ou un noeud d'arrivée situé sur un mur, ainsi que les arcs qui interceptent un mur.

Il convient donc, essentiellement, de récupérer les noeuds principaux qui se trouvent à équidistance d'au moins trois objets, afin notamment de conserver les noeuds qui se situent au milieu des pièces, ainsi que ceux qui se situent à proximité de discontinuités dans les murs, liés à la présence de portes, (figure 8c).

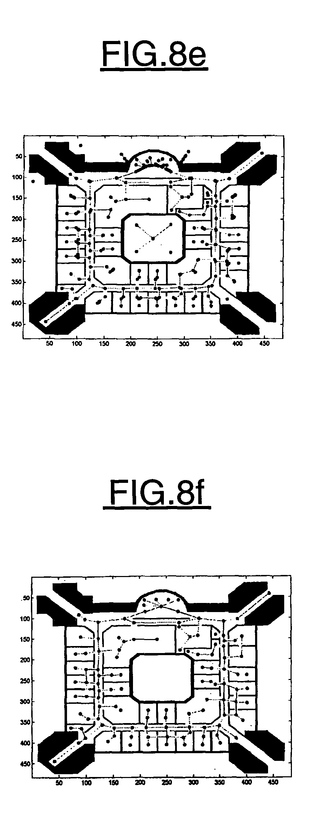

Par ailleurs, on reconstruit les arcs entre les noeuds conservés précédemment (figure 8d). Enfin, on procède à une fusion des noeuds qui se trouvent les plus proches les uns des autres. Il s'agit en fait de calculer le barycentre des noeuds adjacents et dont la longueur des arcs qui les lie est inférieure à une valeur de seuil prédéterminée (figure 8f).

A partir de ce graphe, on contraint les particules à se déplacer sur les arcs. Il n'y a donc plus lieu de vérifier si les particules ont traversé un mur au cours de la phase de détermination *a priori.* De plus, étant donné que la zone à explorer est moins importante, il est possible de diminuer le nombre de particules à utiliser. Par contre, il est nécessaire de gérer les déplacements des particules sur les arcs, sachant que la relation entre ces derniers est connue.

Il a donc été choisi d'orienter les arcs, un arc ayant un noeud de départ et un noeud d'arrivée. En ce qui concerne les particules, elles sont représentées par l'indice de l'arc sur lequel elles se trouvent, la distance par rapport au noeud de départ de l'arc, une vitesse qui est générée aléatoirement, et un poids qui est calculé comme dans l'algorithme de filtrage particulaire décrit précédemment.

Ainsi, les particules se déplacent suivant la loi du mouvement suivante :

$$x_k = x_{k-} + V_k * T + \frac{T^2}{2} * b$$

$$V_k = V_{k-1} + b * T$$

dans lesquelles *b* est un bruit gaussien.

Trois cas peuvent se produire.

Tout d'abord, la nouvelle position de la particule est positive et inférieure à la longueur de l'arc. La particule reste donc sur le même arc.

La nouvelle position de la particule peut être positive et supérieure à la longueur de l'arc. La particule passe sur un des arcs qui arrivent ou partent du noeud d'arrivée de l'arc sur lequel elle se trouvait. Dans le cas où il s'agit d'un arc qui part du noeud d'arrivée, la vitesse reste identique. Au contraire, s'il s'agit d'un arc qui arrive au noeud d'arrivée, la vitesse est l'opposée de la vitesse courante de la particule.

Enfin, la nouvelle position de la particule peut être négative. Dans ce cas, la particule passe sur un des arcs qui arrivent ou qui partent du noeud de départ de l'arc sur lequel elle se trouvait. Dans le cas où il s'agit d'un arc partant du noeud de départ, la vitesse est l'opposée de la valeur absolue de sa vitesse précédente. Au contraire, s'il s'agit d'un arc arrivant au noeud de départ, la vitesse est la valeur absolue de sa vitesse précédente.

De plus, lorsque plusieurs arcs sont disponibles lors du changement d'arcs, on procède à un nouveau tirage aléatoire de l'arc sur lequel la particule va se déplacer. Ce tirage aléatoire s'effectue suivant une loi uniforme mais qui pourrait également être une loi quelconque issue par exemple d'un apprentissage.

Au vu de ce qui précède, en référence à la figure 8, dans le cas où l'on procède au tirage d'une nouvelle position des particules (étape 42), on procède, lors de l'étape 44 suivante à la recherche du nouvel arc associé à la particule.

On procède alors lors de l'étape 46 suivante à une comparaison entre la distance D parcourue et la longueur de l'arc. Si la distance est supérieure à la longueur Li de l'arc, lors de l'étape 48 suivante, dans le cas où la distance est positive, on positionne la particule de la manière suivante :

- soit sur un arc partant avec une vitesse identique et une position donnée par :

$$D = D - L_i,$$

- soit sur un arc arrivant avec une vitesse égale à l'opposée de la vitesse courante de la particule et une position D donnée par :

$$D = Lj - (D - Li).$$

Dans le cas où la nouvelle position de la particule est négative, la particule passe :

- soit sur un arc partant avec une vitesse égale à l'opposée de la valeur absolue de sa vitesse précédente et à une position donnée par :

$$D=D+L_j$$

- soit sur un arc arrivant avec une vitesse égale à la valeur absolue de sa vitesse précédente et une position donnée par D=Abs (D).

La procédure retourne alors à l'étape 46 précédente.

Si, lors de l'étape 46, il a été détecté que la distance D est inférieure à la longueur d'un arc, on procède à une mise à jour du poids des particules (étape 50) à partir de la position délivrée par la mesure. On procède ensuite à une détermination de la nouvelle position courante du terminal, comme indiqué précédemment, par calcul du barycentre des coordonnées de toutes les particules et normalisation avec possibilité de projeter ce barycentre sur le graphe.

## Revendications

1. Procédé de localisation d'un terminal (10) dans un environnement (B), **caractérisé en ce qu'**il comprend les étapes de mesure de la puissance d'émission de bornes (12, 14, 16, 18) de télécommunication d'un réseau local sans fil, de comparaison des puissances du rayonnement reçu en provenance d'au moins deux bornes avec des valeurs de puissance stockées dans une base de données (24) et qui correspondent chacune à une position du terminal par rapport à la borne et de filtrage du résultat délivré par l'étape de comparaison, et **en ce qu'**au cours de l'étape de filtrage, on utilise un filtre particulaire (30) ou un filtre de Kalman (28).

2. Procédé selon la revendication 1, **caractérisé en ce que** l'on utilise un filtre particulaire et **en ce qu'**au cours du filtrage particulaire, on modélise l'ensemble des positions possibles du terminal sous la forme de particules affectées chacune d'une probabilité de présence, on détermine a priori la nouvelle position possible de chaque particule et l'on corrige un poids affecté à la particule, à partir de nouvelles mesures de puissances.

3. Procédé selon la revendication 2, **caractérisé en ce que** la position de chaque particule est déterminée a priori à partir de la dernière position connue de la particule et en introduisant un bruit sur la vitesse de la particule de manière à obtenir un déplacement aléatoire des particules entre deux mesures de puissances successives.

4. Procédé selon la revendication 3, **caractérisé en ce qu'**au cours de la détermination a priori de la nouvelle position possible de chaque particule, on détermine a priori la valeur de la nouvelle position de la particule, sa vitesse, et sa probabilité de présence selon la relation suivante :

$$\begin{bmatrix} v_{k+1} \\ y_{k+1} \\ Vx_k \\ Vy_k \end{bmatrix} = \begin{bmatrix} 1 & 0 & Ts & 0 \\ 0 & 1 & 0 & Ts \\ 0 & 0 & 1 & 0 \\ 0 & 0 & 0 & 1 \end{bmatrix} \begin{bmatrix} x_k \\ y_k \\ Vx_k \\ Vy_k \end{bmatrix} + \begin{bmatrix} Ts/2 & 0 & 0 & 0 \\ 0 & Ts/2 & 0 & 0 \\ 0 & 0 & Ts & 0 \\ 0 & 0 & 0 & Ts \end{bmatrix} \begin{bmatrix} v_{x_k} \\ v_{y_k} \\ v_{x_k} \\ v_{y_k} \end{bmatrix}$$

dans laquelle :

$x_{k+1}$ et $y_{k+1}$ désignent les coordonnées déterminées a priori de la particule ;
$x_k$ et $y_k$ désignent les coordonnées de la particule déterminées à partir d'une mesure de puissances précédente ;
$Vx_{k+1}$ et $Vy_{k+1}$ désignent la vitesse de la particule selon les directions x et y
$vx_k$ et $vy_k$ désignent un bruit traduisant le déplacement de la particule entre deux mesures consécutives.

5. Procédé selon l'une quelconque des revendications 2 à 4, **caractérisé en ce qu'**au cours de l'étape de correction de la position de la particule déterminée a priori, on utilise des informations de déplacement improbable de chaque particule e et l'on modifie la probabilité de présence associée à la particule en fonction des informations de déplacement improbable.

**6.** Procédé selon la revendication 5, **caractérisé en ce que** l'on annule la probabilité de présence de la particule lorsque la particule a traversé un mur d'enceinte entre la dernière position et la nouvelle position déterminée a priori.

**7.** Procédé selon l'une des revendications 5 et 6, **caractérisé en ce que** l'on utilise des informations élaborées à partir d'un plan mémorisé d'un bâtiment (B) dans lequel situe le terminal à localiser pour élaborer les informations de déplacement improbable.

**8.** Procédé selon l'une quelconque des revendications 2 à 7, **caractérisé en ce que** l'on utilise un modèle d'un bâtiment dans lequel se situe le terminal à modéliser, le modèle comprenant un ensemble de trajets possibles pour les particules selon lesquels elles sont autorisées à se déplacer.

**9.** Procédé selon la revendication 8, **caractérisé en ce que** le modèle du bâtiment est élaboré à partir d'un diagramme de Voronoi du bâtiment.

**10.** Procédé selon l'une quelconque des revendications 2 à 9, **caractérisé en ce que** l'étape de correction de la position de la particule comporte en outre une étape consistant à déterminer la valeur d'une variable représentative de la position de chaque particule correspondant à des niveaux de puissance reçus, ladite variable étant modélisée sous la forme d'une loi gaussienne apte à représenter une distance réaliste que peut parcourir une particule entre deux mesures de puissances consécutives.

**11.** Procédé selon la revendication 10, **caractérisé en ce que** la localisation du terminal (10) est calculée par calcul du barycentre des probabilités de présence associées respectivement aux particules.

**12.** Procédé selon l'une des revendications 10 et 11, **caractérisé en ce qu'**il comporte en outre une étape de normalisation des probabilités de présence associées aux particules.

**13.** Procédé selon l'une quelconque des revendications 1 à 12, **caractérisé en ce qu'**au cours de l'étape de filtrage, on utilise un filtre de Kalman (28) apte à tenir compte des mouvements du terminal.

**14.** Procédé selon la revendication 13, **caractérisé en ce que** les équations d'état du filtre de Kalman (28) sont les suivantes :

$$X_{k=A.X_{k-1}} + w_{k-1}$$

et

$$Z_{k=H.X_k} + w'_k$$

dans lesquelles :

$X_k$ est une variable d'état correspondant à la position ($x_k$, $y_k$) et à la vitesse ($vx_k$, $vy_k$) du terminal ;
$Z_k$ est une mesure des coordonnées $x_{BD}$ et $y_{BD}$ du terminal issues de la mesure de puissances ;
w et w' sont des bruits gaussiens ; et
A et H sont des matrices d'état du filtre,

avec :

$$X_k = \begin{bmatrix} x_k \\ y_k \\ vx_k \\ vy_k \end{bmatrix}$$

$$Z_k = \begin{bmatrix} x_{BD} \\ y_{BD} \end{bmatrix}$$

$$A = \begin{bmatrix} 1 & 0 & T_s & 0 \\ 0 & 1 & 0 & T_s \\ 0 & 0 & 1 & 0 \\ 0 & 0 & 0 & 1 \end{bmatrix}$$

*et*

$$H = \begin{bmatrix} 1 & 0 & 0 & 0 \\ 0 & 1 & 0 & 0 \end{bmatrix}$$

**15.** Dispositif de localisation d'un terminal dans un environnement, **caractérisé en ce qu'**il comprend des moyens (20) de mesure de la puissance d'émission de bornes de télécommunication (12, 14, 16, 18) d'un réseau local sans fil et des moyens de comparaison (22) des puissances du rayonnement reçu en provenance d'au moins deux bornes avec des valeurs de puissance stockées dans une base de données (24) et qui correspondent chacune à une position du terminal par rapport à la borne et des moyens de filtrage (26) du résultat délivré par les moyens de comparaison, et **en ce que** les moyens de filtrage comportent des moyens de filtrage particulaire (30) ou un filtre de Kalman (28).

**16.** Programme d'ordinateur sur un support d'informations, ledit programme comportant des instructions de programme adaptées à la mise en oeuvre d'un procédé selon l'une quelconque des revendications 1 à 14, lorsque ledit programme est chargé et exécuté dans un dispositif électronique.

**17.** Signal numérique destiné à être utilisé dans un dispositif électronique pour la localisation, le signal numérique comprenant au moins des codes pour l'exécution par le dispositif électronique des étapes suivantes :

- de mesure de la puissance d'émission des bornes (12, 14, 16, 18) de télécommunication d'un réseau local sans fil,
- de comparaison des puissances du rayonnement reçu en provenance d'au moins deux bornes avec des valeurs de puissance stockées dans une base de données (24) et qui correspondent chacune à une position du terminal par rapport à la borne et
- de filtrage du résultat délivré par l'étape de comparaison, et en ce qu'au cours de l'étape de filtrage, on utilise un filtre particulaire (30) ou un filtre de Kalman (28).

**18.** Support d'informations comportant des instructions de programme adaptées à la mise en oeuvre d'un procédé selon l'une quelconque des revendications 1 à 14, lorsque ledit programme est chargé et exécuté dans un dispositif électronique.

# FIG.1

FIG.2

# FIG.3

| Position X | Position Y | P1 | P2 | P3 | P4 |
|---|---|---|---|---|---|
| 17,5 | 10 | -70 | -56 | -60 | X (pas de signal) |
| 15,5 | 8 | -72 | -50 | -64 | -86 |
| ... | ... | ... | ... | ... | ... |

EP 1 575 328 A1

FIG.4

FIG.5

# FIG.6

# FIG.7

# FIG.8a

# FIG.8b

# FIG.8c

# FIG.8d

## FIG.8e

## FIG.8f

# FIG.9

42 → 44

46

50

52

D ≥ 0

D = D-Li
V = V

D = Lj-(D-Li)
V = -V

D ≥ 0

D = D+Lj
V = -V

D = Abs(D)
V = Abs(V)

48

EP 1 575 328 A1

**Office européen des brevets**

## RAPPORT DE RECHERCHE EUROPEENNE

Numéro de la demande

EP 05 29 0323

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | BAHL P ET AL: "A software system for locating mobile users: design, evaluation and lessons" avril 2000 (2000-04), XP002967193 Extrait de l'Internet: URL:www.research.microsoft.com> [extrait le 2000-04-01] * le document en entier * ----- | 1-18 | H04Q7/38 |
| Y | WO 2004/008795 A (EKAHAU OY ; LEKMAN LARE (FI); MISIKANGAS PAULI (FI)) 22 janvier 2004 (2004-01-22) * abrégé; revendications 1,10; figures 1-4 * * page 2, ligne 34 - page 3, ligne 2 * * page 5, ligne 3 - ligne 33 * * page 7, ligne 26 - page 8, ligne 4 * * page 13, ligne 7 - page 14, ligne 32 * ----- | 1-18 | |
| Y | US 6 263 208 B1 (CHANG KIRK K ET AL) 17 juillet 2001 (2001-07-17) * abrégé; revendication 1; figure 34b * * colonne 2, ligne 52 - ligne 67 * * colonne 7, ligne 48 - ligne 67 * ----- | 1,15,17 | DOMAINES TECHNIQUES RECHERCHES (Int.Cl.7) H04Q |
| Y | EP 1 288 673 A (FRAUNHOFER GES FORSCHUNG) 5 mars 2003 (2003-03-05) * abrégé; revendications 8-10; figure 2 * * colonne 8, ligne 52 - colonne 9, ligne 9 * * colonne 9, ligne 18 - ligne 23 * ----- -/-- | 1,15,17 | |

Le présent rapport a été établi pour toutes les revendications

| Lieu de la recherche | Date d'achèvement de la recherche | Examinateur |
|---|---|---|
| Berlin | 1 avril 2005 | Danielidis, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................
& : membre de la même famille, document correspondant

EPO FORM 1503 03.82 (P04C02)

**Office européen
des brevets**

**RAPPORT DE RECHERCHE EUROPEENNE**

Numéro de la demande

EP 05 29 0323

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 00/50918 A (MICROSOFT CORP)<br>31 août 2000 (2000-08-31)<br>* abrégé; figures 5,6 *<br>* page 13, ligne 14 - page 14, ligne 13 *<br>* page 15, ligne 6 - ligne 21 *<br>* page 20, ligne 19 - page 21, ligne 19 *<br>* page 22, ligne 12 - page 23, ligne 7 *<br>----- | 1-18 | |
| A | WO 03/092318 A (AXIS AB ; PAHMP MIKAEL (SE); SAGEFALK WILLY (SE))<br>6 novembre 2003 (2003-11-06)<br>* abrégé; figures 1,5,6,8a,8b *<br>* page 30, ligne 1 - page 31, ligne 29 *<br>----- | 1-18 | |
| A | US 6 362 783 B1 (ISHIBASHI HIROYOSHI ET AL) 26 mars 2002 (2002-03-26)<br>* abrégé; revendication 1; figures 12-16 *<br>* colonne 21, ligne 20 - ligne 40 *<br>* colonne 22, ligne 17 - ligne 28 *<br>* colonne 38, ligne 52 - ligne 62 *<br>----- | 1-18 | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| Berlin | 1 avril 2005 | Danielidis, S |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
..............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**　　EP 05 29 0323

La présente annexe indique les membres de la  famille de brevets relatifs aux documents  brevets cités dans le rapport de
recherche européenne visé ci-dessus.
Lesdits members sont contenus au fichier informatique de l'Office  européen des brevets à la date du
Les renseignements fournis sont donnés à titre  indicatif et n'engagent pas la responsabilité  de l'Office européen des brevets.

01-04-2005

| Document brevet cité au rapport de recherche | | Date de publication | Membre(s) de la famille de brevet(s) | | Date de publication |
|---|---|---|---|---|---|
| WO 2004008795 | A | 22-01-2004 | FI | 20021357 A | 11-01-2004 |
| | | | AU | 2003244672 A1 | 02-02-2004 |
| | | | WO | 2004008795 A1 | 22-01-2004 |
| US 6263208 | B1 | 17-07-2001 | AUCUN | | |
| EP 1288673 | A | 05-03-2003 | DE | 10142156 A1 | 03-04-2003 |
| | | | EP | 1288673 A2 | 05-03-2003 |
| WO 0050918 | A | 31-08-2000 | AU | 3503100 A | 14-09-2000 |
| | | | AU | 3706500 A | 14-09-2000 |
| | | | WO | 0050918 A2 | 31-08-2000 |
| | | | WO | 0050919 A2 | 31-08-2000 |
| | | | US | 6839560 B1 | 04-01-2005 |
| | | | US | 6799047 B1 | 28-09-2004 |
| WO 03092318 | A | 06-11-2003 | SE | 524509 C2 | 17-08-2004 |
| | | | AU | 2003230485 A1 | 10-11-2003 |
| | | | SE | 0201203 A | 24-10-2003 |
| | | | WO | 03092318 A1 | 06-11-2003 |
| | | | US | 2003220116 A1 | 27-11-2003 |
| US 6362783 | B1 | 26-03-2002 | JP | 3161334 B2 | 25-04-2001 |
| | | | JP | 10051840 A | 20-02-1998 |
| | | | CN | 1164807 A | 12-11-1997 |
| | | | GB | 2311697 A ,B | 01-10-1997 |
| | | | GB | 2329801 A ,B | 31-03-1999 |
| | | | HK | 1001650 A1 | 07-04-2000 |
| | | | HK | 1016807 A1 | 20-04-2000 |
| | | | JP | 3165391 B2 | 14-05-2001 |
| | | | JP | 10094040 A | 10-04-1998 |
| | | | SG | 97756 A1 | 20-08-2003 |
| | | | US | 6275190 B1 | 14-08-2001 |
| | | | US | 6304218 B1 | 16-10-2001 |
| | | | US | 6359587 B1 | 19-03-2002 |
| | | | US | 6259406 B1 | 10-07-2001 |
| | | | US | 6140964 A | 31-10-2000 |

EPO FORM P0460

Pour tout renseignement concernant cette annexe :  voir Journal Officiel de l'Office européen des  brevets, No.12/82